# FASCICULE DE BREVET EUROPEEN

(11) **EP 2 193 111 B1**
(45) Date de publication et mention de la délivrance du brevet: **29.05.2019**
(21) Numéro de dépôt: 08832261.5
(22) Date de dépôt: 07.08.2008
(51) Int. Cl.: C04B 41/49, C04B 24/42, C04B 28/04, C04B 28/14, C04B 111/00, C04B 111/20, C04B 111/21, C04B 111/27

(54) **ENDUIT MONOCOUCHE POUR FACADE ET SA FABRICATION**
EINSCHICHTIGER FASSADENPUTZ UND DEREN HERSTELLUNG
SINGLE LAYER PLASTER FOR FACADE AND PRODUCTION THEREOF

(30) Priorité: 21.09.2007 FR 0757764
(43) Date de publication de la demande: 09.06.2010
(73) Titulaire: Saint-Gobain Weber, 77170 Servon (FR)
(72) Inventeur: COMOY, Daniel, F-01400 Condeissiat (FR); DECLEMY, Thierry, F-01320 Saint Nizier Le Desert (FR)
(74) Mandataire: Saint-Gobain Recherche
(86) Numéro de dépôt international: PCT/FR2008/051475
(87) Numéro de publication internationale: WO 2009/037410

(56) Documents cités:
- WO-A-2005/068400
- US-A- 5 962 585
- US-B1- 6 403 163
- US-B1- 6 869 643
- DATABASE WPI Week 199322 Thomson Scientific, London, GB; AN 1993-180463 XP002483719 & SU 1 738 781 A1 (BELO POLY) 7 juin 1992 (1992-06-07)

## Description

La présente invention concerne un nouvel enduit, en particulier monocouche, dans le domaine de la construction, ainsi que son procédé de fabrication et son utilisation pour revêtir et traiter des surfaces (extérieures, voire intérieures) de bâtiments, en particulier des façades.

Traditionnellement, les enduits, ou mortiers, utilisés en façades permettent l'imperméabilisation et la décoration des parois extérieures (généralement verticales ou inclinées). L'imperméabilisation empêche notamment l'eau d'arriver au support (cela implique également que l'enduit ne doit pas fissurer, doit adhérer au support, etc). La décoration inclue notamment le dressage (action de rendre plan), la couleur et l'aspect (par exemple lisse, taloché, gratté, structuré, lavé, etc.). Il existe différents types d'enduits (en particulier enduits monocouches ou déposés en plusieurs couches différentes aux fonctionnalités généralement séparées, enduits de type essentiellement minéral ou organique, etc), chaque type d'enduit présentant des propriétés spécifiques et le choix de l'enduit s'opérant généralement en fonction de différents critères (coût, fonction(s) recherchée(s), manipulation (application manuelle ou mécanique), supports à revêtir, mode d'application, situation géographique, conditions climatiques, hauteur du bâtiment, etc.). D'autres types de couches, telles que des peintures peuvent aussi être utilisées en façades comme décrit par exemple dans le document SU1738781.

La particularité d'un enduit monocouche réside dans le fait qu'il assure à lui seul (en une ou éventuellement plusieurs passes selon notamment l'aspect recherché) les fonctions d'imperméabilisation et de décoration, contrairement aux autres enduits dits «traditionnels » pour lesquels, afin d'obtenir le même résultat, il faut superposer des couches de compositions différentes avec, notamment, des temps de séchage plus ou moins longs entre ces couches. L'enduit monocouche peut ainsi être utilisé seul comme revêtement de surface et ne nécessite pas d'être complété par une couche d'un autre enduit pour être opérationnel, même si l'application d'autres couches n'est pas interdite pour autant.

Cependant, si l'enduit monocouche permet une pose rapide et l'apport des fonctions recherchées en un seul produit, sa formulation est plus complexe que les autres enduits ; en outre, tout comme les autres enduits, ses performances en matière de résistance à l'eau ou hydrophobie ne sont pas toujours suffisantes pour éviter des altérations (en particulier esthétiques ou potentiellement visibles) dans le temps (en particulier pour les enduits minéraux), telles que des différentiations de teintes, dues notamment à des phénomènes de carbonatation ou blanchiments et/ou dues à des phénomènes de faïençage et/ou de séchages différenciés selon les endroits, etc, ou encore des salissures d'origine biologique (champignons,...), minérale (poussières,...), et/ou organique (fumées, suies,...), ou la prolifération de formations végétales, etc.

La présente invention a cherché à mettre au point un enduit amélioré pour l'imperméabilisation et la décoration des surfaces de bâtiment, en particulier un enduit monocouche de longévité esthétique améliorée présentant et conférant une résistance à l'eau accrue et durable desdites surfaces (et permettant de limiter le cas échéant les altérations visibles telles que différentiations de teintes et/ou salissures et/ou prolifération de formations végétales), sans que cette amélioration se fasse au détriment des autres propriétés de l'enduit, cet enduit étant notamment approprié pour le marché du neuf ou de la rénovation, pratique à manipuler et à poser selon des méthodes courantes.

Ce but est atteint grâce à l'enduit selon l'invention selon la revendication 1 comprenant au moins un silane présentant au moins une fonction alcoxy (ou alcoxysilane).

Par « enduit comprenant » on entend " enduit dont le ou les constituants initiaux sont... " ou encore " enduit formé à partir de... ", l'enduit après mélange notamment avec l'eau et/ou après application sur une surface se présentant sous forme d'une crème ou d'une couche durcie dans laquelle certains constituants ont le cas échéant réagi.

Cet enduit (ou mortier) selon l'invention est préférentiellement un enduit minéral (c'est-à-dire dans lequel le liant, notamment, est essentiellement - à au moins 95% et généralement 100% - minéral), ou peut être éventuellement un enduit organique (dans lequel, par exemple, le liant est essentiellement à base de résine(s) organique(s)). Outre le(s) silane(s) précité(s), il comprend (ou est formé ou préparé à partir de) un mélange de composants (mélange de base), lequel mélange peut être choisi éventuellement parmi des compositions d'enduits ou de mortiers existantes communément employées pour enduire les façades (notamment pour l'isolation thermique par l'extérieur). Ce mélange de composants comprend au moins un liant et des granulats.

Le liant joue notamment sur l'adhérence, la cohésion et la résistance de l'enduit, et peut être minéral et/ou organique ; il est généralement formé au moins de (ou constitué de) ciment (en particulier ciment Portland, notamment blanc ou gris, etc.) et/ou de plâtre, et peut également comprendre de la chaux (en particulier aérienne ou hydraulique) et/ou une ou des résines organiques (par exemple de type acrylique ou styrène, etc.). Il est généralement apporté au mélange sous forme de poudre, de granulométrie répartie en particulier entre 0 et 200 µm. Le taux de liant dans la composition d'enduit selon l'invention est généralement compris entre 5 et 30% en poids par rapport à la composition de l'enduit prêt à gâcher (c'est-à-dire avant ajout de l'eau, cette composition se présentant alors classiquement sous forme d'un mélange pulvérulent).

Les granulats (ou agrégats ou sables) jouent notamment sur l'épaisseur, la dureté, l'aspect final et la perméabilité de l'enduit, et sont généralement formés de sables siliceux, calcaires et/ou silico-calcaires, présentant une granulométrie comprise entre 100 µm et 5 mm, en particulier comprise entre 100µm et 3 mm. Le taux de granulats dans la composition de l'enduit prêt à gâcher est compris entre 60 et 90% en poids.

Le mélange de base ou la composition de l'enduit peut également comprendre des composants appelés fillers, se présentant généralement sous forme de poudre, de granulométrie en particulier comprise entre 0 et 120 µm, ces fillers étant généralement calcaires ou siliceux. Le taux de fillers dans la composition de l'enduit prêt à gâcher est généralement compris entre 0 et 30% en poids, la somme totale de liant et de fillers étant généralement comprise entre 5 et 60% en poids.

Le mélange peut encore comprendre des charges allégeantes, par exemple de la vermiculite expansée et/ou de la perlite expansée et/ou du verre expansé et/ou du polystyrène expansé, voire également des fibres végétales, etc, ces charges présentant le cas échéant une granulométrie répartie généralement entre 0 et 3 mm. Le taux de charges allégeantes dans la composition de l'enduit prêt à gâcher est généralement compris entre 0 et 10% en poids.

A ce mélange précédent peuvent également être ajoutés un ou des additifs ou adjuvants conférant des propriétés particulières, par exemple des agents rhéologiques, des agents rétenteurs d'eau, des agents entraîneurs d'air, des agents épaississants, des agents de protection biocides, des agents dispersants, des agents débullants, des pigments (en particulier des pigments minéraux), des fibres (cas des enduits fibrés) de renfort ou à fonctionnalité rhéologique, des accélérateurs et/ou des retardateurs, et/ou d'autres agents pour améliorer la prise, le durcissement, la stabilité de l'enduit après application, et/ou jouant sur la couleur, la mise en oeuvre de l'enduit, etc. Le taux de ces additifs et adjuvants dans la composition de l'enduit prêt à gâcher ne dépasse pas généralement de l'ordre de 10% en poids, et est le plus souvent compris entre 0.1 et 10% en poids.

L'alcoxysilane mentionné selon l'invention constitue un adjuvant ou additif qu'il est possible d'ajouter de façon pratique au mélange déjà formé (il peut donc être ajouté à un mélange pré-existant) ou que l'on peut ajouter lors de la fabrication du mélange ou de l'enduit (prêt à gâcher ou mélangé à l'eau) à partir des divers constituants précités.

Le taux du ou des adjuvants sous forme de silane(s) présentant au moins une fonction alcoxy dans la composition de l'enduit prêt à gâcher est de préférence d'au moins 0.1% en poids, et n'excède pas (est inférieur ou égal à) 1 % en poids ; généralement ce taux de silane(s) présentant au moins une fonction alcoxy est de l'ordre de 0.1 à 0.5% en poids de la composition de l'enduit prêt à gâcher.

Le silane mentionné selon l'invention présente au moins une et de préférence plusieurs fonctions (ou groupements ou groupes) alcoxy (ce groupement alcoxy contribuant le cas échéant à des couplages, en particulier dans l'enduit final et/ou en mélange dans la matrice cimentaire). Il comprend également généralement au moins un groupement formé d'une chaîne hydrocarbonée, éventuellement ramifiée, éventuellement substituée. De préférence cette chaîne est une chaîne acyclique (ou aliphatique ou ne comprenant pas de cycles), en particulier est un groupement alkyle, cette chaîne étant en particulier saturée.

Selon un mode de réalisation de l'invention, le silane est ainsi un alkyl alcoxy silane répondant en particulier à la formule suivante :

Si (R¹) (R²) (R³) (R⁴)

dans laquelle :
- R¹, R² et R³ sont des groupements alcoxy,
- R⁴ est un groupement alkyle dont la chaîne principale présente avantageusement de 1 à 12 atomes de carbone.

Les groupes R¹, R² et R³ peuvent être identiques ou différents et sont choisis notamment parmi les alcoxy de 1 à 4 atomes de carbone, en particulier parmi les groupements méthoxy, éthoxy et propoxy.

Le groupement alkyle R⁴ peut être ramifié, la ou les chaînes secondaires présentant chacune généralement dans ce cas de 1 à 4 atomes de carbone, mais est de préférence linéaire (non ramifié).

Dans un mode de réalisation préféré, l'enduit comprend ainsi comme silane(s) au moins un alkyl (de préférence linéaire) trialcoxy silane, par exemple répondant à la définition précédente dans laquelle : R¹ = R² = R³ = -O-CH₂-CH₃, et R⁴ = -CH₂-CH₂-CH₂-CH₂-CH₂-CH₂-CH₂-CH₃, c'est-à-dire un octyl triéthoxy silane.

L'enduit selon l'invention peut comprendre le cas échéant, comme adjuvants, plusieurs silane(s) différents présentant au moins une fonction alcoxy. De la même façon, il n'est pas exclu que l'enduit selon l'invention comprenne d'autres adjuvants de formulation différente mais pouvant également contribuer à améliorer la résistance à l'eau et la longévité (en particulier esthétique) de l'enduit, par exemple certains polysiloxanes, et/ou des adjuvants supplémentaires à effet hydrofugeant, par exemple du stéarate de zinc, de l'oléate de soude, etc.

L'enduit selon l'invention se présente sous forme de poudre sous sa forme prête à gâcher, avant ajout de l'eau permettant d'obtenir une texture crémeuse prête à être appliquée. Le taux de gâchage (ou eau ajoutée) est généralement de l'ordre de 15 à 40 parts en poids (pour 100 parts en poids de la composition prête à gâcher formée du mélange pulvérulent). A noter que la présente invention concerne l'enduit sous sa forme prête à gâcher aussi bien que sous sa forme mélangée à l'eau.

Avantageusement, l'enduit selon l'invention est un enduit monocouche, apportant notamment en une ou deux passes les fonctions d'hydrophobie/hydrofugation et de décoration recherchées. Il peut être utilisé comme enduit de parement destiné à être rapporté (projeté, appliqué, etc.) sur une surface (ou support), telle qu'une surface de mur ou de façade d'un édifice, pour lui donner esthétisme et protection. La surface ou le support recevant l'enduit peut-être fait en différents matériaux tels que béton ou parpaings, brique, ciment, chaux-ciment, maçonnerie, laine de verre ou roche, etc.

L'enduit selon l'invention, employé en particulier en couche finale, apporte à la fois l'effet esthétique requis (couleur, etc.) et les fonctions recherchées pour ce genre de revêtement telles que l'imperméabilisation, l'adhérence au support, la résistance mécanique (en flexion, en compression, résistance à l'impact, à la fissuration, etc.), la résistance aux variations de température, au gel, aux ultraviolets, la perméabilité à la vapeur d'eau, la facilité de mise en oeuvre, et le dressage éventuel. Il offre d'emblée, sans nécessiter de traitement ou couche supplémentaire, une protection fortement améliorée contre la pénétration d'eau, l'eau au contact de cet enduit s'évacuant en s'écoulant le long de l'enduit, et lutte efficacement contre l'apparition d'altérations (salissures, formations végétales, blanchiments due à la carbonatation, faïençage, spectres de séchage, etc.). Il présente également un effet autonettoyant, l'eau ruisselant le long de l'enduit entraînant les poussières et salissures. Il est adapté au marché du neuf et de la rénovation et peut notamment s'intégrer dans tout procédé d'isolation thermique par l'extérieur ; il répond aux normes de sécurité en vigueur dans ce domaine et présente notamment une durabilité et un vieillissement compatible avec son utilisation comme enduit de façade, en particulier ne présente ni dégradation ni fissuration à l'issue des cycles de vieillissement décrits par le guide EOTA utilisé pour les procédés d'isolation thermique par l'extérieur (ITE) avec enduit et/ou à l'issue des essais de vieillissement artificiels pour les revêtements pour extérieurs (ITE) selon la norme NF T 30-049 et/ou NF P 84-402 et/ou selon la norme EN1015-21 (compatibilité des enduits par rapport aux supports), etc.

Comme évoqué précédemment, l'enduit montre un effet particulièrement performant en ce qui concerne la résistance à l'eau, l'eau ne s'absorbant pas mais s'évacuant en gouttes à la surface de la couche d'enduit, cet effet « perlant » significatif et amélioré se traduisant en particulier par un angle de contact (d'une goutte d'eau à la surface d'une couche dudit enduit durci) supérieur à 140° et/ou par un angle de décrochage (d'une goutte d'eau à la surface d'une couche dudit enduit durci) inférieur à 30°.

L'angle de contact mentionné est mesuré en déposant une goutte d'eau distillée de 8 µl à l'aide d'une micropipette à la surface d'une couche lisse d'enduit durci (de 10 mm d'épaisseur), puis en mesurant par le haut de la goutte à l'aide d'un microscope le diamètre de la goutte (2 mesures par goutte), cette valeur de diamètre permettant de déduire l'angle de contact de la goutte avec la surface.

Egalement, l'angle de décrochage mentionné est mesuré en déposant aléatoirement dix gouttes d'eau distillée de 48µl à la surface d'une couche d'enduit durci positionnée sur un plateau à plat, puis en inclinant le plateau avec une vitesse constante (en particulier de l'ordre de 0.25°/seconde) et en notant à quel degré d'inclinaison la goutte tombe.

La présente invention concerne également un procédé de fabrication d'un enduit selon l'invention, dans lequel on ajoute aux autres composants de la composition de l'enduit au moins un silane présentant au moins une fonction alcoxy.

Le silane peut être ajouté aux autres composants de la composition d'enduit dans la formulation prête à gâcher ou dans l'enduit prêt à déposer après ajout de l'eau. De préférence, il est ajouté à la composition d'enduit sous forme de poudre, en étant préalablement adsorbé sur au moins un des composants solides de la composition. Le procédé selon l'invention comprend ainsi de préférence une étape préalable d'adsorption du silane, initialement sous forme liquide (généralement en solution) à la surface d'un composant de l'enduit apte à piéger (en particulier par physisorption) ledit silane avant son incorporation dans la composition d'enduit. Cette adsorption se fait en particulier sur un composant à base de silicium et/ou voire sur un composant calcaire, en particulier sur tout ou partie des granulats de la composition d'enduit, en mélangeant par exemple le silane sous forme liquide avec lesdits granulats. Le mélange obtenu incorporant le silane est ensuite ajouté le cas échéant aux autres composants de la composition d'enduit, le silane étant le cas échéant facilement relargué dans la composition finale obtenue.

Comme déjà évoqué, l'enduit selon l'invention est avantageusement conservé sous forme de poudre (par exemple en sac d'enduit prêt à gâcher) avant son utilisation. Préalablement à son dépôt sur un support, l'enduit est normalement mélangé avec de l'eau, puis déposé sur une surface, par exemple une façade de bâtiment. La surface ou support devant recevoir l'enduit est généralement propre, saine (ne risquant pas notamment de se fragmenter ou s'effriter), dépoussiérée et sèche. Le cas échéant, elle peut avoir été préalablement traitée (par exemple décapée, ragréée, lavée, munie de renformis, calfeutrée, etc.) par exemple pour égaliser la surface, la rendre apte à recevoir l'enduit selon l'invention, colmater des fissures, participer à l'isolation du support, etc.

Le revêtement peut être réalisé par toute méthode permettant d'obtenir l'épaisseur et l'aspect voulus, par exemple en étalant l'enduit choisi ou en le projetant à l'aide d'un dispositif à air comprimé, etc. L'application de l'enduit peut être faite le cas échéant en une ou plusieurs (selon par exemple l'épaisseur désirée, etc) passes, appliquées frais sur frais ou le cas échéant séchées avant dépôt de la suivante. Le séchage de l'enduit selon l'invention est avantageusement uniforme même si le support varie, évitant ainsi des différences de teintes de l'enduit durci.

En cas d'utilisation d'armatures de renfort (par exemple sous forme de grilles de fibres de renfort), notamment en isolation thermique par l'extérieur, ces dernières peuvent être incorporées dans une couche (le cas échéant une des passes) d'enduit, encore frais, déposée sur la surface de pose. En cas de débordement, l'enduit ou mortier peut le cas échéant être nettoyé, par exemple à l'eau avant séchage ou brossé après séchage.

Selon notamment la composition de l'enduit et la méthode d'application, l'aspect conféré par l'enduit peut être lisse ou non, aucun traitement supplémentaire ni ajout d'un enduit de finition ou film supplémentaire n'étant nécessaire (l'enduit pouvant cependant être muni de décorations supplémentaires telles que peintures, modénatures, matriçage ou structuration, etc.)

Le revêtement réalisé peut être laissé nu, peut être coloré dans la masse (du fait de la présence de pigments dans l'enduit), peut également être structuré (doté d'effets de surface particuliers), par exemple par striation, estampage, ferrage, création de nervures, etc. notamment au niveau de l'enduit.

L'épaisseur de l'enduit final (après dépôt et, selon l'aspect désiré, grattage éventuel, etc) est généralement de l'ordre de 8 à 20 mm, en particulier de 10 à 15 mm environ. Le séchage et la réaction éventuelle (réticulation, durcissement) de l'enduit ou de certains composants de l'enduit se fait généralement à température ambiante (en particulier entre 5 et 35°C).

La présente invention concerne également un support (ou structure ou substrat), tel qu'une paroi ou façade de bâtiment, revêtu, au moins en partie, de l'enduit selon l'invention.

Les exemples suivants non limitatifs illustrent la composition et les performances de l'enduit selon l'invention par rapport à un enduit de référence pour une même épaisseur d'enduit de 10 mm. Dans ces exemples, on compare l'angle de contact et l'angle de décrochage d'une ou des gouttes d'eau déposées sur chaque couche d'enduit durci dans les conditions de mesure déjà explicitées précédemment. La composition d'enduit selon l'invention et la composition de référence sont formées du même mélange de base consistant en un mortier homologué tel que défini dans la norme EN 196-1, ledit mortier étant à base de ciment et de sable (incluant des granulats).

L'enduit de référence et l'enduit selon l'invention différent en ce que dans l'enduit de référence, le précédent mélange de base est complété par 2 parts en poids de stéarate de zinc (pour 1000 parts en poids du mélange de base) en tant qu'adjuvant à effet hydrofugeant, tandis que dans l'enduit selon l'invention le mélange de base est complété par 2 parts en poids (pour 1000 parts en poids du mélange de base) d'octyl triéthoxy silane.

On obtient les résultats suivants : pour 4 mesures effectuées dans chaque cas, l'angle de contact d'une goutte d'eau mesuré pour l'enduit selon l'invention est supérieur à 165° tandis qu'il varie entre 95 et 105° pour l'enduit de référence ; et pour 3 essais effectués, chaque fois sur 10 gouttes, l'angle de décrochage varie entre 10 et 30° (la grande majorité des mesures étant inférieures à 20°) pour l'enduit selon l'invention, alors que dans le cas de l'enduit de référence, aucune goutte ne s'étant déplacée ou n'étant tombée même pour un angle supérieur à 90, cet angle n'a pas pu être évalué (et est considéré supérieur à 90°). Il apparaît clairement que, dans le cas de l'enduit selon l'invention, l'eau glisse à la surface de l'enduit et est facilement évacuée, tandis qu'elle a tendance à pénétrer dans l'enduit de référence.

Les enduits selon l'invention peuvent être utilisés notamment comme enduits de façade sur les parois extérieures verticales ou inclinées de bâtiments, etc.

## Revendications

1. Enduit pour le revêtement de façade, ledit enduit comprenant un mélange comprenant au moins un liant et des granulats, les granulats présentant une granulométrie comprise entre 100 µm et 5 mm, et le taux de granulats dans la composition de l'enduit prêt à gâcher étant compris entre 60 et 90% en poids, ledit enduit comprenant au moins un silane présentant au moins une fonction alcoxy, et le taux de silane(s) présentant au moins une fonction alcoxy dans la composition de l'enduit prêt à gâcher étant d'au moins 0.1% en poids et n'excédant pas 1% en poids.

2. Procédé de fabrication d'un enduit selon la revendication 1 dans lequel on ajoute à la composition de l'enduit au moins un silane présentant au moins une fonction alcoxy.

3. Procédé selon la revendication 2 **caractérisé en ce que** le silane, initialement sous forme liquide, est préalablement adsorbé sur au moins un des composants solides de la composition, avant son incorporation dans la composition d'enduit sous forme de poudre.

4. Support, telle qu'une façade de bâtiment, **caractérisé en ce qu'**il est revêtu au moins en partie de l'enduit selon la revendication 1.

5. Utilisation d'un enduit selon la revendication 1 pour améliorer l'hydrophobie d'une surface de bâtiment et limiter le cas échéant les altérations visibles dues notamment à des phénomènes de carbonatation ou blanchiments et/ou dues à des phénomènes de faïençage et/ou de séchages différenciés, et/ou salissures d'origine biologique, minérale, et/ou organique, et/ou prolifération de formations végétales .

## Patentansprüche

1. Putz zur Fassadenverkleidung, wobei der Putz ein Gemisch umfasst, das mindestens ein Bindemittel und Granulate umfasst, wobei die Granulate eine Korngröße zwischen 100 µm und 5 mm aufweisen und der Granulatanteil in der Zusammensetzung des zum Anrühren bereiten Putzes zwischen 60 et 90 Gew% liegt, wobei der Putz mindestens ein Silan umfasst, das mindestens eine Alcoxy-Funktion aufweist, und der (die) Silananteil(e) mindestens eine Alcoxy-Funktion in der Zusammensetzung des zum Anrühren bereiten Putzes aufweist/aufweisen, die mindestens 0,1 Gew% umfasst und 1 Gew% nicht übersteigt.

2. Verfahren zur Herstellung eines Putzes nach Anspruch 1, wobei der Zusammensetzung des Putzes mindestens ein Silan zugegeben wird, das mindestens eine Alcoxy-Funktion aufweist.

3. Verfahren nach Anspruch 2, **dadurch gekennzeichnet, dass** das Silan, anfänglich in flüssiger Form, im Voraus auf mindestens einem der festen Bestandteile der Zusammensetzung vor seiner Beimischung in die Zusammensetzung des Putzes in Pulverform absorbiert wird.

4. Träger wie z. B. eine Gebäudefassade, **dadurch gekennzeichnet, dass** sie mindestens teilweise mit dem Putz nach Anspruch 1 verkleidet ist.

5. Verwendung eines Putzes nach Anspruch 1, um die Hydrophobie einer Gebäudeoberfläche zu verbessern und gegebenenfalls die sichtbaren Veränderungen aufgrund insbesondere von Phänomenen der Karbonisierung oder Bleichungen und/oder aufgrund von differenzierten Phänomenen der Rissbildung und/oder der differenzierten Austrocknungen und/oder der Verschmutzungen biologischer, mineralischer und/oder organischer Art und/oder der Proliferation von Pflanzenbildungen zu begrenzen.

## Claims

1. Rendering for facade coating, the said rendering comprising a mixture comprising at least one binder and granulates, the granulates having a particle size of between 100 µm and 5 mm, and the content of granulates in the ready-to-mix rendering composition being between 60% and 90% by weight, the said rendering comprising at least one silane containing at least one alkoxy function, and the content of silane(s) containing at least one alkoxy function in the ready-to-mix rendering composition being at least 0.1% by weight and not exceeding 1% by weight.

2. Process for manufacturing a rendering according to Claim 1, in which at least one silane containing at least one alkoxy function is added to the rendering composition.

3. Process according to Claim 2, **characterized in that** the silane, initially in liquid form, is pre-adsorbed onto at least one of the solid components of the composition, before its incorporation in the rendering composition in powder form.

4. Support, such as a building facade, **characterized in that** it is at least partly coated with the rendering according to Claim 1.

5. Use of a rendering according to Claim 1, for improving the hydrophobicity of a building surface and limiting, where appropriate, visible impairments due especially to carbonatation or bleaching phenomena and/or due to crazing and/or differentiated drying phenomena, and/or soiling of biological, mineral and/or organic origin, and/or proliferation of plant growths.
